# FASCICULE DE BREVET EUROPEEN

(11) **EP 3 710 131 B1**
(45) Date de publication et mention de la délivrance du brevet: **25.09.2024**
(21) Numéro de dépôt: 18796068.7
(22) Date de dépôt: 07.11.2018
(51) Int. Cl.: B01D 35/30, B01D 29/56, C02F 1/00

(54) **CARTOUCHE DE FILTRATION D'EAU CONTAMINÉE**
FILTERKARTUSCHE FÜR KONTAMINIERTES WASSER
FILTRATION CARTRIDGE FOR CONTAMINATED WATER

(30) Priorité: 14.11.2017 FR 1760697
(43) Date de publication de la demande: 23.09.2020
(73) Titulaire: GMT International, 84000 Avignon (FR)
(72) Inventeur: MACHOU, Yves, 30400 Villeneuve Les Avignon (FR)
(74) Mandataire: Hautier IP
(86) Numéro de dépôt international: PCT/EP2018/080453
(87) Numéro de publication internationale: WO 2019/096650

(56) Documents cités:
- WO-A1-2005/007206
- CN-U- 201 906 509
- DE-A1- 102015 225 408
- US-A- 5 922 199
- US-A1- 2004 154 975
- US-A1- 2009 008 318
- US-B1- 6 210 577

## Description

### DOMAINE DE L'INVENTION

La présente invention concerne le domaine de la filtration d'eau contaminée en hydrocarbure.

Une première application concerne la filtration d'eau contaminée par des fuites d'hydrocarbures en provenance d'un transformateur électrique d'un réseau de distribution d'électricité. Toutefois, comme cela apparaîtra clairement par la suite, l'invention n'est pas limitée à cette application.

### ARRIERE-PLAN TECHNOLOGIQUE

Dans le domaine de la filtration d'eau contaminée par des fuites d'hydrocarbures en provenance d'un transformateur électrique, le document EP 2287412 A1 décrit un système de filtration qui est équipé de cartouches filtrantes telles que présentées dans le document WO 2006/084100 A1. Ces cartouches comprennent un filtre et un préfiltre. Le filtre utilise un mélange de particules de polymère insoluble dans l'eau qui sont configurées pour absorber les hydrocarbures. Ces cartouches se présentent sous forme d'un conduit monobloc de polychlorure de vinyle ou PVC.

En fonction de l'endroit où est positionné le système de filtration, les fluides passant par la cartouche peuvent la soumettre à une pression plus ou moins importante. La résistance de la cartouche à cette pression est primordiale, car, en cas de résistance insuffisante, la cartouche peut être détériorée et ne plus assurer son rôle de filtration. Dans ce cas, un relâchement dans l'environnement des hydrocarbures qu'elle aurait retenus jusque-là est également à craindre.

La cartouche se présentant sous forme d'un conduit monobloc, l'adaptation de la résistance à la pression de la cartouche induit notamment l'adaptation de l'épaisseur de la paroi monobloc de la cartouche. En effet, il y a tout lieu de penser que : plus l'épaisseur de la paroi est importante, plus la résistance à la pression est satisfaisante. C'est ainsi que les cartouches de filtration présentées dans les documents WO 2006/084100 A1 et US 2009/008318 A1 ont l'avantage d'être suffisamment résistantes à la pression.

La contrepartie consiste en ce que la cartouche présente une masse conséquente, notamment en matériaux plastiques. Dès lors, en cas de défaillance ou de fin de vie de la cartouche, une masse de déchet tout aussi importante est générée. En outre, en cas de défaillance de l'un seulement parmi le filtre et le préfiltre, c'est la cartouche entière qui doit être remplacée.

Le coût de service que représente le traitement des déchets issus de l'utilisation des systèmes de filtration connus de l'art antérieur est proportionnel à la masse de ces déchets. Ainsi, un problème des systèmes de filtration connus de l'art antérieur est le coût de service lié au traitement des déchets qu'ils engendrent. DE 10 2015 225408 A1, CN 201 906 509 U, WO 2005/007206 A1, US 2004/154975 A1, US 5 922 199 A et US 6 210 577 B1 sont d'autres documents pertinents.

Il existe donc un réel besoin de concevoir une cartouche de filtration qui permet de réduire le coût de service lié au traitement des déchets qu'ils engendrent immanquablement. De préférence, cet avantage ne doit pas être atteint au détriment de la résistance à la pression de la cartouche.

L'invention permet de résoudre tout ou partie des inconvénients des techniques actuelles.

### RESUME DE L'INVENTION

L'invention concerne une cartouche de filtration d'eau contaminée en hydrocarbure selon l'une des revendications 1-10 comprenant au moins
- un préfiltre comprenant au moins un conduit, de préférence rigide, configuré pour y loger un premier matériau de filtration,
- un filtre comprenant au moins un conduit, de préférence rigide, configuré pour y loger au moins un deuxième matériau de filtration, et
- un système de fixation configuré pour maintenir assemblés le conduit du filtre et le conduit du préfiltre.

De façon avantageuse, le système de fixation comprend au moins une bague d'assemblage, de préférence rigide, maintenant assemblés de façon amovible l'un par rapport à l'autre, le conduit du filtre et le conduit du préfiltre par une de leurs extrémités respective.

En outre, la cartouche comprend trois parties amovibles : le filtre, le préfiltre et la bague d'assemblage. Et les conduits du filtre et du préfiltre sont fixés juxtaposés l'un à l'autre

La bague d'assemblage est réutilisable consécutivement à un ou plusieurs remplacements du filtre et/ou du préfiltre. En cas de
défaillance ou d'une usure de l'un parmi le filtre et le préfiltre, seule la pièce défaillante peut être changée et non pas l'ensemble de la cartouche. De ce fait, on limite la masse de déchet occasionnée par un changement de filtre ou de préfiltre.

De plus, la bague d'assemblage permet de renforcer fortement la fixation entre le filtre et le préfiltre, par rapport aux systèmes de fixation amovible de l'art antérieur, sans pour autant augmenter la masse générale de la cartouche. Notamment, les conduits du filtre et du préfiltre étant fixés juxtaposés l'un à l'autre, sans recouvrement de l'un par l'autre, ils sont composés d'un minimum de matière, ce qui limite encore la masse de déchet potentiellement occasionnée.

Le traitement des déchets issus de l'utilisation de la cartouche de filtration induit nécessairement un coût de service. Ce coût de service est ici réduit par rapport aux solutions de l'art antérieur par minimisation de la masse des déchets.

La cartouche de filtration selon l'invention relève donc de l'écoconception. Elle permet de respecter les principes du développement durable et de préservation de l'environnement, en optimisant la réutilisation de ces composants et la valorisation des déchets issus de son utilisation.

Avantageusement, l'invention concerne aussi un système de récupération d'hydrocarbure issu d'au moins un transformateur électrique comprenant au moins une cartouche de filtration selon le premier aspect de l'invention.

### BREVE INTRODUCTION DES FIGURES

D'autres caractéristiques, buts et avantages de la présente invention apparaitront à la lecture de la description détaillée qui suit, et en regard des dessins annexés donnés à titre d'exemples non limitatifs et sur lesquels :
- la figure 1a montre une coupe transversale du préfiltre selon un mode réalisation de l'invention ;
- la figure 1b montre une coupe transversale du préfiltre selon un autre mode réalisation de l'invention ;
- la figure 2a est une coupe transversale de la bague d'assemblage selon un mode réalisation de l'invention ;
- la figure 2b est une coupe transversale de la bague d'assemblage selon un autre mode réalisation de l'invention ;
- la figure 3 est une vue de face de la première grille du filtre selon un mode réalisation de l'invention ;
- la figure 4 est une vue de profil de la première grille du filtre selon le mode réalisation de l'invention illustré sur la figure 3 ;
- la figure 5 est une coupe transversale du filtre selon le mode réalisation de l'invention illustré sur les figures 3 et 4 ;
- La figure 6 montre le positionnement avant assemblage du filtre, du préfiltre et de la bague assemblage tels qu'illustrés sur les figures précédentes ; et
- La figure 7 montre le filtre, le préfiltre et la bague d'assemblage tels qu'illustrés sur les figures 1b, 2b et 3 à 5 assemblés ensemble.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. Par exemple, les matériaux de filtrations référencés 130 et 430 sur les figures sont schématisés de façon monobloc, alors qu'ils peuvent être structurés.

### DESCRIPTION DETAILLEE

Avant de décrire un mode de réalisation de l'invention en référence aux dessins, d'autres caractéristiques optionnelles de l'invention, qui peuvent être mises en oeuvre de façon combinée selon toutes combinaisons ou de manière alternative, sont indiquées ci-après :
- La bague d'assemblage comprend un premier épaulement et un premier élément de fixation. L'un parmi le filtre et le préfiltre comprend un deuxième épaulement configuré pour coopérer avec le premier épaulement. L'autre parmi le filtre et le préfiltre comprend un deuxième élément de fixation configuré pour coopérer avec le premier élément de fixation de la bague d'assemblage. La coopération entre les premier et deuxième éléments de fixations est paramétrée de sorte à maintenir les premier et deuxième épaulements en butée l'un contre l'autre.

Ainsi, une étanchéité entre le filtre et le préfiltre est obtenue au moins par la mise en butée du premier épaulement et du deuxième épaulement l'un contre l'autre. On s'assure ainsi de réduire, voire d'annihiler, tout risque de fuite au niveau d'une liaison entre le préfiltre et le filtre.
- Le filtre comprend le deuxième épaulement et dans laquelle le préfiltre comprend le deuxième élément de fixation.
- La cartouche comprenant en outre un joint, de préférence torique, configuré pour pouvoir être logé entre les premier et deuxième épaulements. Le joint torique permet d'accroître l'étanchéité de la fixation du filtre au préfiltre.
- Les premier et deuxième éléments de fixation sont réglables de sorte que les premier et deuxième épaulements soient maintenus en butée l'un contre l'autre avec une force d'appui réglable. De préférence, l'un parmi le premier élément de fixation et le deuxième élément de fixation comprend un taraudage et l'autre parmi le premier élément de fixation et le deuxième élément de fixation comprenant un filetage.

La bague d'assemblage est ainsi configurée pour mettre en prise l'épaulement du filtre et le serrer sur le préfiltre grâce à la coopération du filetage du filtre et du taraudage de la bague d'assemblage. Ce système est avantageusement simple d'utilisation. La facilité de montage et de démontage qu'offre la présente invention, et qui potentiellement ne nécessite aucun outil autre que la main est synonyme de gain de temps sur site, notamment lors de l'installation, de la maintenance et/ou du remplacement de tout ou partie de la cartouche.
- le deuxième épaulement s'étend depuis le contour d'une première grille configurée pour fermer, de façon perméable au moins à l'eau, l'extrémité de l'un parmi le conduit du filtre et le conduit du préfiltre par laquelle le conduit du filtre et le conduit du préfiltre sont destinés à être maintenus assemblés.
- la bague d'assemblage présente une première partie de la bague configurée pour s'étendre en vis-à-vis d'une partie du conduit du filtre et une deuxième partie de la bague configurée pour s'étendre en vis-à-vis d'une partie du conduit du préfiltre.
- la première partie de la bague est paramétrée de sorte à présenter une longueur Lba2 de recouvrement et de contact avec le conduit du filtre et une épaisseur Eba2 sur ladite longueur Lba2.
- la première partie de la bague présente une longueur Lba2 sur laquelle la première partie recouvre et contacte le conduit du filtre.

La deuxième partie de la bague d'assemblage permet ainsi de guider le filtre dans la bague d'assemblage et participe à la résistance à la pression du filtre. De ce fait, on limite encore la masse de déchet occasionnée par un changement de filtre.
- L'une au moins parmi la longueur Lba2 de recouvrement et de contact de la bague d'assemblage et l'épaisseur Eba2 détermine l'épaisseur du conduit du filtre pour résister à la pression exercée au moins par l'eau contaminée lors de son passage dans ce conduit. La longueur Lba2 sur laquelle la première partie recouvre et contacte le conduit du filtre et l'épaisseur Eba2 de la première partie de la bague sur la longueur Lba2 sont configurées pour résister à la pression exercée au moins par l'eau contaminée lors de son passage dans ce conduit. De préférence, plus la longueur Lba2 est grande et/ou plus l'épaisseur Eba2 est grande, plus l'épaisseur du conduit du filtre est petite.

Selon l'art antérieur, l'épaisseur du conduit du filtre est déterminée pour assurer une résistance suffisante à la pression. Ici, la résistance à la pression est assurée conjointement par le filtre lui-même et par la bague d'assemblage. L'épaisseur du conduit du filtre peut donc être réduite. Ainsi, en transférant une partie de la résistance à la pression du filtre vers la bague d'assemblage, il est avantageusement possible de réduire le poids du filtre, et conséquemment la masse de déchet occasionné par un changement de filtre.
- Le filtre, et en particulier le conduit du filtre et ses première et deuxième grilles, est à base de la même matière, et de préférence à base de l'un parmi un polypropylène et un acrylonitrile butadiène styrène (ou ABS).
- Le préfiltre et en particulier, le conduit du préfiltre, et la bague d'assemblage sont à base de la même matière ou à base de matières différentes entre elles, et de préférence à base de l'un parmi un polyamide et un polyoxyméthylène (ou POM).
- les conduits du filtre et du préfiltre sont cylindriques.
- le conduit du préfiltre est ouvert par son extrémité d'assemblage avec le filtre. L'autre extrémité du préfiltre comprend un goulot destiné par exemple à la fixation de l'extrémité d'une canalisation. dans laquelle l'eau contaminée est destinée à être acheminée jusqu'à la cartouche. Chaque extrémité du conduit du filtre est fermée, de façon perméable au moins à l'eau, par une grille solidaire du conduit.
- le premier matériau de filtration est configuré pour retenir des particules macroscopiques solides dispersées dans l'eau contaminée et le deuxième matériau de filtration est configuré pour retenir les hydrocarbures contenus dans l'eau contaminée. Le deuxième matériau de filtration comprend par exemple un mélange de polymères.
- le conduit du filtre est en outre configuré pour y loger le deuxième matériau de filtration de sorte qu'il confine le deuxième matériau de filtration à l'intérieur du filtre.

Le premier matériau de filtration est ainsi amovible relativement au conduit du préfiltre lorsque le filtre et le préfiltre ne sont pas assemblés. Il peut alors être extrait pour être nettoyé puis replacé dans le conduit du préfiltre. Alternativement, il peut être extrait puis remplacé.

Le deuxième matériau de filtration est ainsi enfermé dans le conduit du filtre. C'est ce matériau de filtration qui assure la rétention des hydrocarbures. Le filtre usagé est aisément remplacé sur site par un filtre neuf. Le filtre usagé peut être transféré vers son lieu de recyclage, sans que les hydrocarbures qu'il retient puissent être relâchés dans l'environnement.
- La cartouche présente la forme d'une pièce de révolution. Les conduits sont de préférence sensiblement cylindriques.
- la bague d'assemblage présente sensiblement la forme d'un conduit dont la section présente de préférence la même forme que celles des conduits du préfiltre et du filtre et dont le diamètre intérieur est déterminé en fonction du diamètre Dpf2 extérieur du préfiltre et du diamètre de l'épaulement du filtre. Le premier épaulement s'étend par exemple depuis la surface intérieure du conduit que la bague d'assemblage forme sensiblement.

On limite ainsi les pertes de charge, notamment par effet Venturi, entre le préfiltre et le filtre.
- la somme de la masse du préfiltre et de la masse de la bague d'assemblage est supérieure à 50 %, de préférence supérieure à 60 %, de la masse totale de la cartouche de filtration.

On considère ici la masse totale de la cartouche de filtration n'ayant pas encore servie à filtrer une eau contaminée. Par exemple, la masse totale de la cartouche de filtration est égale à 1,4 kg et la somme de la masse du préfiltre et de la masse de la bague d'assemblage est sensiblement égale à 0,9 kg ; la masse du filtre non chargé en hydrocarbures est donc sensiblement de 0,5 kg. Lorsque le filtre est saturé d'hydrocarbures, la masse totale de la cartouche de filtration attend sensiblement 1,8 kg. Un changement de filtre occasionne donc un déchet présentant une masse de sensiblement égale à 0,9 kg. Dans ce cas, 50 % en masse de la cartouche de filtration, correspondant à la masse du préfiltre et de la bague d'assemblage, est réutilisable, les 50 % en masse restante correspond à la masse du filtre saturé en hydrocarbure, étant destructibles selon les normes en vigueur. La réduction du coût de ce traitement par destruction est proportionnelle à la réduction de la masse de déchets générés.

Dans la présente invention, on entend par « rigide » la qualité d'un dispositif qui supporte au moins sa propre masse sans déformation apte à entrainer une rupture de son intégrité.

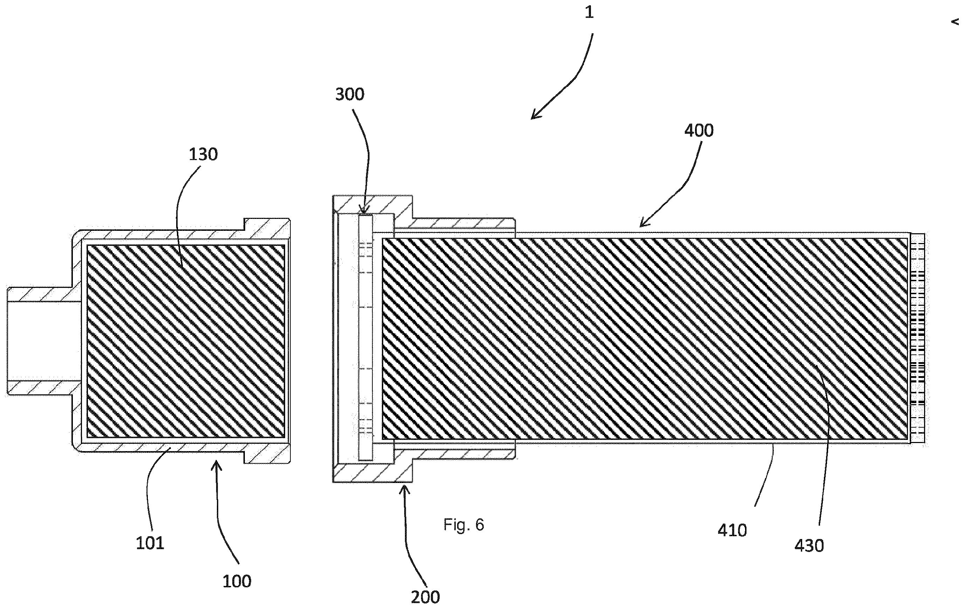

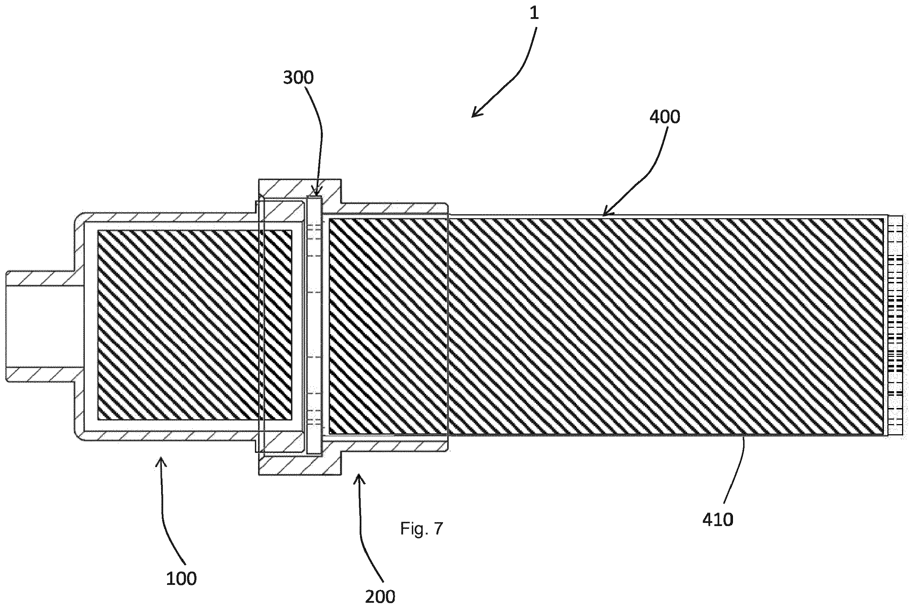

En référence aux figures 6 et 7, la cartouche 1 de filtration d'eau contaminée comprend avantageusement au moins : un filtre 400, un préfiltre 100 et une bague d'assemblage 200.

### Le filtre 400

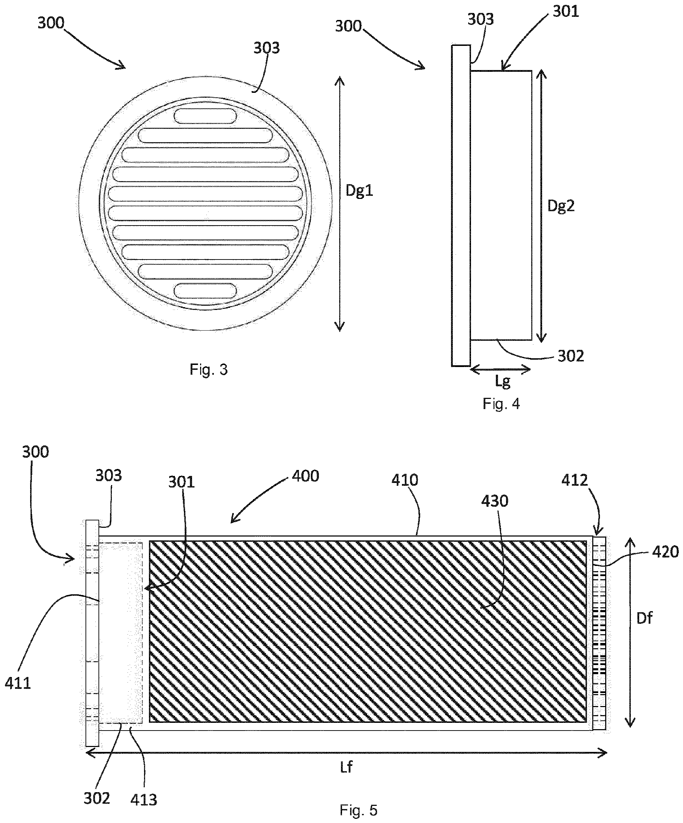

Tel illustré sur la figure 5, le filtre 400 peut comprendre au moins un conduit 410, une première grille 300, une deuxième grille 420 et un matériau de filtration 430, dit deuxième matériau de filtration, situé dans le conduit 410 entre les deux grilles 300 et 420.

Le conduit 410 peut comprendre une première embouchure 411 et une deuxième embouchure 412. La première grille 300 est positionnée à la première embouchure 411 du filtre et la deuxième grille 420 à la deuxième embouchure 412 du filtre 400 tel que représenté en figure 5. Lorsqu'un fluide circule dans le filtre 400 au travers du conduit 410, il entre dans le conduit 410 par la première embouchure 411, et sort du filtre 400, après filtration, par la deuxième embouchure 412. L'épaisseur de la paroi du conduit 410 du filtre 400 peut être comprise entre 1 mm (millimètre ou 10⁻³ mètre) et 4 mm, et est de préférence égale à 2,8 mm, par exemple à plus ou moins 0,5 mm près.

La longueur Lf du conduit 410 peut être comprise entre 150 mm et 300 mm, et est de préférence égale à 230 mm, par exemple à plus ou moins 20 mm près.

Le diamètre extérieur Df du conduit 410 peut être compris entre 50 mm et 150 mm, et est de préférence égale à 90 mm, par exemple à plus ou moins 20 mm près.

Le diamètre intérieur du conduit peut être compris entre 30 mm et 149 mm et de préférence égale à 88,90 mm, par exemple à plus ou moins 20 mm près.

De préférence, le conduit 410 est réalisé en un matériau choisi parmi un polypropylène et un acrylonitrile butadiène styrène (ou ABS). De plus, le conduit 410 est de préférence rigide. De préférence, le conduit 410 est suffisamment rigide pour pouvoir porter sa propre masse en plus des masses des première et deuxième grilles 300/420, la masse du deuxième matériau de filtration 430 ainsi que la masse du liquide le traversant. Les première et deuxième grilles 300/420 sont réalisées elles-aussi en un matériau choisi parmi un polypropylène et un acrylonitrile butadiène styrène (ou ABS). Elles sont de préférence réalisées dans le même matériau que le conduit 410 du filtre 400.

Un taraudage de fixation 413 de la première grille 300 peut être réalisé sur la surface intérieure du conduit 410 pour coopérer avec un filetage 302 correspondant réalisé dans une portion en saillie 301 de la première grille 300. La fixation de la première grille 300 au conduit 410 est ainsi rendu possible par vissage. Le taraudage de fixation 413 s'étend de la première embouchure 411 vers la deuxième embouchure 412 sur une distance au moins égale à l'étendue de portion en saillie 301 de la première grille 300. L'étendue de portion en saillie 301 peut être comprise entre 10 mm et 45 mm et est de préférence égale à 25 mm, par exemple à plus ou moins 5 mm près. De préférence, le taraudage de fixation grille 413 à un pas qui peut être compris entre 0,25 mm et 6 mm et de préférence égale à 2 mm, par exemple à plus ou moins 0,5 mm près. De façon corrélée, le filetage 302 de la première grille 300 peut comprendre un pas compris entre 0,25 mm et 6 mm et de préférence égale à 2 mm, par exemple à plus ou moins 0,5 mm près. Le filetage 302 peut s'étendre sur au moins 30% de la surface extérieure de la portion de saillie 301 et de préférence sur l'ensemble de la surface extérieure de la portion de saillie 301. La portion de saillie 301 a une longueur Lg qui peut être comprise entre 10 mm et 70 mm et est de préférence égale à 20 mm, par exemple à plus ou moins 5 mm près.

Dans ce mode de réalisation selon lequel la fixation par vissage de la grille 300 avec le conduit 410 du filtre 400 est réalisée par vissage, la deuxième grille 420 peut être solidaire du conduit 410 du filtre 400 et former une pièce d'un seul tenant avec le conduit 410 du filtre 400. En alternative, la deuxième grille 420 peut être clipsée au conduit 410 du filtre 400.

En alternative à une fixation par vissage de la première grille 300 avec le conduit 410 du filtre 400, la première grille 300 peut former une pièce d'un seul tenant avec le conduit 410 du filtre 400. Selon cette alternative, la deuxième grille 420 est de préférence amovible du conduit 410 du filtre 400 ; elle peut par exemple être clipsée au conduit 410 du filtre 400.

Sur site, l'ouverture du filtre 400 pour accéder au deuxième matériau de filtration 430 est à tout le moins entravée (par exemple en obligeant l'utilisation d'outils spécialisés), afin de limiter au maximum les risques de fuite d'hydrocarbures sur site. On entend par « site », l'endroit où est fonctionnellement installée la cartouche 1 de filtration, à savoir de préférence dans un bac de récupération d'hydrocarbures dans les transformateurs électriques, mais encore dans les parkings, etc. L'emplacement sur site s'oppose à l'emplacement de traitement des déchets (hors site).

Le dévissage de la première grille 300 ou le déclipsage de la deuxième grille 420 peut être réalisé hors site, à la main ou par le biais d'outils spécifiques.

La première grille 300, telle que représenté en figures 3 et 4 comprend au moins un deuxième épaulement 303. Le deuxième épaulement 303, visible en figure 3, a un diamètre extérieur Dg1 qui peut être compris entre 60 mm et 160 mm et est de préférence égale à 105 mm, par exemple à plus ou moins 20 mm près. Le diamètre Dg1 du deuxième épaulement 303 de la grille 300 est de préférence toujours supérieur au diamètre Df du conduit 410 afin de créer ledit épaulement. Le deuxième épaulement 303 à une épaisseur Eb qui peut être comprise entre 3 mm et 20 mm, et est de préférence égale à 6 mm, par exemple à plus ou moins 2 mm près.

La première grille 300 a une forme identique à la forme du conduit 410, à savoir de préférence une forme sensiblement cylindrique. Le diamètre de la deuxième grille est sensiblement identique au diamètre de la deuxième embouchure 412 du filtre 400, c'est-à-dire sensiblement égal au diamètre Df du conduit 410. Les première et deuxième embouchures 411/412 du filtre ont des diamètres sensiblement égaux entre eux.

De préférence, le conduit 410 comprend le deuxième matériau de filtration 430. Ce deuxième matériau de filtration 430 est avantageusement configuré pour retenir des hydrocarbures peut être présents dans l'eau. Le deuxième matériau de filtration 430 est un polymère du type de celui décrit dans la demande EP 2287412 A1. Le deuxième matériau de filtration 430 est de préférence confiné dans le conduit 410, tant que la cartouche 1 est sur site. Lors du recyclage des hydrocarbures, le deuxième matériau de filtration 430 pourra, le cas échéant à l'aide d'outils spécialisés, être retiré du conduit 410. Par exemple, le deuxième matériau de filtration 430 est confiné dans une partie centrale du conduit 410 du filtre 400, non seulement par les première et deuxième grilles du filtre 400, mais également par la disposition à l'intérieur du conduit du conduit 410 du filtre 400 et à ses deux extrémités, de part et d'autre du deuxième matériau de filtration 430, d'un matériau de filtration tel qu'un premier matériau de filtration 130 décrit plus bas.

En permettant le confinement du deuxième matériau de fixation 430 lors de sa présence sur site, on limite les risques de fuites dans la nature des hydrocarbures filtrés par la cartouche 1.

### Le préfiltre 100

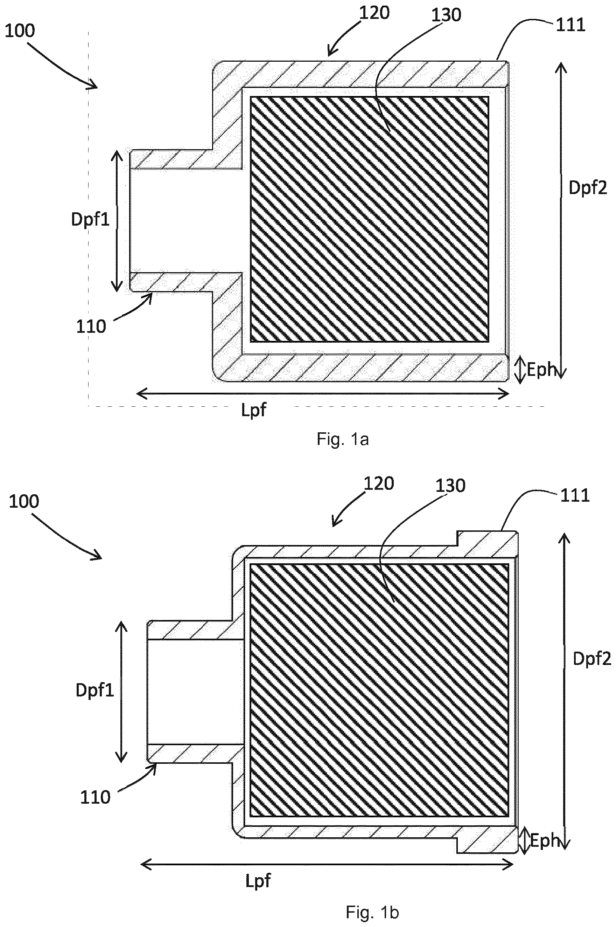

Le préfiltre 100 est visible en figures 1a, 1b, 6 et 7. Le préfiltre 100 peut comprendre un conduit 101 divisé en une première partie 110 et une deuxième partie 120. Le conduit 101 comprend une première et une deuxième embouchure. Un premier matériau de filtration 130 est logé dans le conduit 101 du préfiltre 100, de préférence dans la deuxième partie 120 du conduit 101. De préférence, les parties 110 et 120 du conduit du préfiltre ont de préférence une forme sensiblement cylindrique. Les parties 110 et 120 du conduit du préfiltre peuvent ne pas avoir un diamètre identique. Ainsi, dans le mode de réalisation préféré de l'invention, la première embouchure par laquelle l'eau contaminée est destinée à entrer dans le préfiltre comprend un diamètre Dpf1 inférieur au diamètre Dpf2 de la deuxième embouchure par laquelle l'eau contaminée est destinée à passer du préfiltre 100 au filtre 400. En effet, le raccordement du préfiltre 100 et du filtre 400 est réalisé au niveau de la deuxième embouchure du préfiltre 100. Cette configuration avantageuse permet notamment d'augmenter le volume intérieur du préfiltre 100 afin de stocker le premier matériau 130 de filtration dans deuxième partie 120 du préfiltre. Avec un volume intérieur plus important, le débit d'eau peut rester similaire, en passant du préfiltre au filtre, malgré un ralentissement du flux dû à la filtration.

Plus particulièrement, le diamètre intérieur de la deuxième partie 120 du préfiltre 100 peut être sensiblement égal au diamètre intérieur du filtre 400. Le diamètre intérieur de la deuxième partie du préfiltre 120 peut être est compris entre 50 mm et 150 mm et est de préférence égale à 90 mm, par exemple à plus ou moins 10 mm près. Le diamètre Dpf2 extérieur de la deuxième partie du préfiltre 120 peut être est compris entre 55 mm et 145 mm et est de préférence égale à 108 mm, par exemple à plus ou moins 10 mm près. De préférence, le diamètre Dpf2 extérieur de la deuxième partie du préfiltre 120 est sensiblement égal au diamètre Df du conduit 410 du filtre 400. Ainsi, la deuxième embouchure de la deuxième partie du préfiltre 120 est configurée pour pouvoir buter sur la première grille 300 du filtre, de préférence en affleurant le pourtour extérieur du deuxième épaulement 303. L'épaisseur Epf du préfiltre 100, et en particulier de sa deuxième partie 120, peut être comprise entre 3 mm et 20 mm et est de préférence égale à 4 mm, par exemple à plus ou moins 2 mm près. L'épaisseur Epf du conduit du préfiltre 100 est déterminée par rapport à deux critères. Elle doit permettre une résistance satisfaisante à la pression et offrir une durée de vie importante au préfiltre 100. En effet, cette pièce est destinée à être changée moins régulièrement que le filtre 400. La longueur Lpf totale du préfiltre peut être comprise entre 70 mm et 160 mm et est de préférence égale à 122 mm, par exemple à plus ou moins 20 mm près. Un premier filetage 111 est présent sur la surface extérieure de la deuxième partie 120 du préfiltre. Dans le mode de réalisation préféré de l'invention, le premier filetage 111 présent sur la deuxième partie 120 du préfiltre peut s'étendre depuis la deuxième l'embouchure sur une longueur qui peut être comprise entre 10 mm et 50 mm, et de préférence à égale 20 mm, par exemple à plus ou moins 5 mm près. Au moins sur cette longueur d'extension du premier filetage 111, la deuxième partie 120 du préfiltre présente de préférence une surépaisseur par rapport à l'épaisseur Epf du reste du conduit 101 du préfiltre 100. Le premier filetage 111 peut présenter un pas compris entre 0,25 mm et 6 mm et de préférence égale à 2 mm, par exemple à plus ou moins 0,5 mm près. Le premier filetage 111 est configuré pour coopérer avec la bague d'assemblage 200.

De préférence, le préfiltre 100 est à base de l'un parmi un polyamide et un polyoxyméthylène (ou POM).

De préférence, le premier matériau de filtration 130 est configuré pour filtrer l'eau de sorte à retenir des sédiments macroscopiques. Ce premier matériau de filtration 130 peut être une mousse ou tout autre matériau permettant une telle filtration.

Avantageusement, le premier matériau de filtration 130 est amovible du préfiltre 100. Son nettoyage et son remplacement sont facilités ce qui permet une réutilisation et un recyclage simplifiés, respectivement. Ainsi, seul le premier matériau de filtration 130 peut être changé, même sur site, ce qui réduit les coûts d'entretien.

Ce type de matériau de filtration est connu et décrit notamment dans la demande EP2287412.

La figure 1a représente notamment le préfiltre 100 dans un premier mode de réalisation. Dans ce mode de réalisation, le préfiltre 100 est réalisé par usinage.

La figure 1b représente un autre mode de réalisation du préfiltre 100. Dans ce mode de réalisation, le préfiltre 100 est réalisé par injection.

Le mode de réalisation de la figure 1b est préférentiel par rapport au mode de réalisation illustré sur la figure 1a notamment du fait qu'il permet de réduire encore la matière nécessaire pour la fabrication et l'utilisation du préfiltre 100. Dans cette dernière réalisation, la deuxième partie 120 du conduit 101 présente une surépaisseur à l'emplacement du premier filetage 111.

### La bague d'assemblage 200

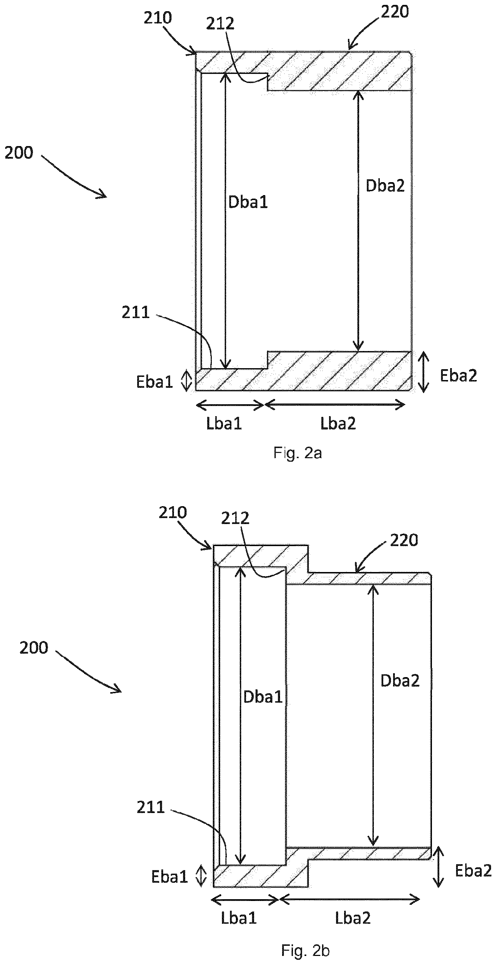

En référence aux figures 2 a et 2b, la bague d'assemblage peut comprendre une première partie 220 et une deuxième partie 210. Un premier épaulement 212 peut être ménagé entre les première et deuxième parties 210 ; 220 de la bague d'assemblage 200. La deuxième partie 210 de la bague 200 présente un diamètre intérieur Dba1 qui peut être compris entre 55 mm et 145 mm et est de préférence égal à 108 mm. Le diamètre intérieur Dba1 est de préférence sensiblement égal au diamètre Dpf2 extérieur de la deuxième partie 120 du préfiltre 100. La bague d'assemblage 200 présente un diamètre extérieur compris entre 60 mm et 180 mm, et est de préférence égale à 118 mm, par exemple à plus ou moins 20 mm près. La deuxième partie 210 de la bague 200 comprend un deuxième filetage 211 configuré pour coopérer avec le premier filetage 111 présent sur la deuxième partie 120 du préfiltre 100.

La première partie 220 de la bague 200 présente un diamètre intérieur Dba2 qui peut être compris entre 51 mm et 151 mm et de préférence de 91 mm, par exemple à plus ou moins 10 mm près. Il est de préférence supérieur à celui du diamètre extérieur du filtre de sorte que la première partie 220 de la bague 200 constitue un coulisseau dans lequel le conduit 410 du filtre 400 est propre à coulisser étroitement. Ainsi, seul le diamètre intérieur de la bague d'assemblage varie entre la première partie 220 de la bague 200 et la deuxième partie 210 de la bague 200.

Le diamètre extérieur quant à lui peut rester constant.

En alternative, le diamètre extérieur de la bague 200 peut présenter une variation se traduisant par la présence d'un épaulement sur le contour extérieur de la bague. Cet épaulement est par exemple décalé, dans la direction d'une longueur Lba de la bague d'assemblage 200, d'une distance comprise entre 2 mm et 10 mm, de préférence égale à 7,5 mm, à plus ou moins 2 mm près, du premier épaulement 212 ménagé sur le pourtour intérieur de la bague.

L'épaisseur Eba1 de paroi de la deuxième partie 210 de la bague 200 peut être comprise entre 3 mm et 20 mm et est de préférence égale à 5 mm, par exemple à plus ou moins 2 mm près. Lorsque le diamètre extérieur de la bague reste constant, l'épaisseur Eba2 de paroi de la première partie 220 de la bague 200 peut être comprise entre 5 mm et 20 mm et est de préférence égale à 10 mm, par exemple à plus ou moins 2 mm près. Lorsque le diamètre extérieur de la bague 200 varie, l'épaisseur Eba2 de paroi de la première partie 220 de la bague 200 peut être comprise entre 3 mm et 20 mm et est de préférence égale à 4 mm, par exemple à plus ou moins 1 mm près. L'épaisseur des parois de la bague d'assemblage 200 est déterminée en fonction de la rigidité et de la résistance à la pression désirées atteintes de l'ensemble.

La longueur Lba de la bague d'assemblage 200 peut être comprise entre 50 mm et 100 mm et est de préférence égale à 75 mm, par exemple à plus ou moins 10 mm près. La longueur de la première partie 220 de la bague 200 est de préférence supérieure à la longueur de la deuxième partie 210 de la bague 200. Selon l'invention, la longueur de la première partie 220 de la bague 200 est au moins deux fois supérieure à la longueur de la deuxième partie 210 de la bague 200.

La bague d'assemblage 200 est de préférence réalisée dans le même matériau que le préfiltre 100, ou dans un matériau différent, mais choisi parmi un polyamide et un polyoxyméthylène (ou POM).

La figure 2a représente notamment la bague 200 dans un premier mode de réalisation. Dans ce mode de réalisation, la bague 200 est réalisée par usinage.

La figure 2b représente un autre mode de réalisation de la bague 200. Dans ce mode de réalisation, la bague 200 est réalisée par injection.

Le mode de réalisation de la figure 2b est préférentiel par rapport au mode de réalisation illustré sur le figure 2a notamment du fait qu'il permet de réduire encore la matière nécessaire pour la fabrication et l'utilisation de la bague 200 notamment en réduisant l'épaisseur de la première partie 220 de la bague 200. Dans cette dernière réalisation, la deuxième partie 210 de la bague 200 présente une surépaisseur de matière à l'emplacement du deuxième filetage 211.

L'assemblage du préfiltre 100, de la bague d'assemblage 200 et du filtre 400 est décrit ci-dessous en référence aux figures 6 et 7.

Comme illustré sur la figure 6, le préfiltre 400 est tout d'abord inséré dans la bague d'assemblage 200. Plus particulièrement, le filtre 400 est inséré par sa deuxième extrémité 420 au travers de la deuxième partie 210 de la bague d'assemblage 200. Comme évoqué précédemment, la première partie 220 de la bague 200 forme un coulisseau configuré pour guider le coulissement du filtre 400. Le coulissement du filtre 400 dans la bague 200 est limité par la butée du deuxième épaulement 303 de la première grille 300 du filtre 400 sur le premier épaulement 212 de la bague 200. A ce stade, une partie de la deuxième partie 210 de la bague 200 s'étend au-delà de la première grille 300 du filtre 400 ; cette partie supporte au moins en partie le premier élément de fixation. Comme précédemment évoqué, le premier élément de fixation est configuré et destiné à coopérer avec le deuxième élément de fixation du préfiltre. Dans le mode de réalisation préféré de l'invention, le premier élément de fixation prend la forme d'un taraudage pratiqué dans la deuxième partie 210 de la bague 200 et le deuxième élément de fixation prend la forme d'un premier filetage 111 correspondant pratiqué sur le pourtour de la deuxième extrémité du préfiltre 100. À ce stade, il est donc possible de venir mettre en prise le premier élément de fixation avec le deuxième élément de fixation, par exemple par vissage du taraudage pratiqué dans la deuxième partie 210 de la bague 200 avec le filetage du préfiltre 100. À mesure que le vissage progresse, la deuxième extrémité du préfiltre 100 est amenée en butée contre la première grille 300 du filtre 400, en pressant le deuxième épaulement 303 du filtre 400 contre le premier épaulement 212 de la bague 200. L'on parvient ainsi à la situation illustrée sur la figure 7 où filtre 400 et préfiltre 100 sont assemblés entre eux par la bague 200. La pression avec laquelle le préfiltre 100 presse les premier et deuxième épaulements entre eux est avantageusement réglable, et plus particulièrement proportionnelle à la force de vissage entre le préfiltre 300 et la bague d'assemblage 200. Cette pression entraîne une réaction inverse proportionnelle qui conduit au frottement entre le taraudage de la bague 200 et le filetage du préfiltre 100, pour empêcher tout désassemblage fortuit de la cartouche 1. La fixation par vissage est particulièrement avantageuse, car elle permet un assemblage et un désassemblage rapide, tout en permettant une résistance à la pression importante.

Après assemblage, le premier épaulement 212 vient donc buter sur le deuxième épaulement 303 de la première grille 300. La première partie 220 de la bague 200 est en vis-à-vis du conduit 410 du filtre 400. La deuxième partie 210 de la bague 200 est au moins en partie en vis-à-vis du pourtour de la deuxième extrémité du préfiltre 100.

La longueur de la première partie 220 de la bague 200 en vis-à-vis du filtre 400 permet un renforcement de la structure dans son ensemble.

La première partie 220 de la bague 200 présente un diamètre intérieur correspondant sensiblement au diamètre extérieur du conduit 410 du filtre 400. La longueur de la première partie 220 de la bague 200 s'étend en vis-à-vis d'une partie du conduit 410 du filtre 400, et plus particulièrement, sur une longueur de recouvrement et de contact Lba2 significative, par exemple comprise entre 3 et 20%, de préférence égale à 4,6%, à plus ou moins 1% près, par rapport à la longueur Lf du conduit 410 du filtre 400. En outre, que le diamètre extérieur de la bague reste constant ou varie, la première partie 220 de la bague 200 peut présenter une épaisseur Eba2 significative, par exemple supérieure d'un rapport compris entre 10 et 200%, de préférence supérieure de 43%, à plus ou moins 5% près, par rapport à l'épaisseur de la paroi du conduit 410 du filtre 400. La première partie 220 de la bague 200 participe ainsi à la résistance en pression que doit supporter le filtre 400. Ainsi, l'épaisseur de la paroi du conduit 410 du filtre 400 peut être réduite, car c'est l'épaisseur globale de la cartouche 1, à savoir l'épaisseur de la paroi du conduit 410 du filtre 400 plus l'épaisseur Eba2 de la première partie 220 de la bague 200 qui permet de déterminer la résistance de la cartouche 1 au moins sur la longueur de recouvrement et de contact Lba2 du filtre 400 par la bague 200. De préférence, plus la longueur de recouvrement et de contact Lba2 est grande, plus l'épaisseur du conduit 410 du filtre 400 peut être réduite. En alternative ou en combinaison, plus l'épaisseur Eba2 de la première partie 220 de la bague 200 est grande, plus l'épaisseur du conduit 410 du filtre 400 peut être réduite.

En renforçant les portions proches de l'assemblage, et en prolongeant ce renforcement le long du conduit 410 du filtre 400, on améliore grandement la résistance de la cartouche en autorisant une diminution de la masse du conduit 410 du filtre 400. Ainsi, la masse de déchet dû au changement du filtre 400 est grandement limitée. Cela permet d'une part des économies de coûts d'entretien (la masse de produits à changer régulièrement est réduite, donc les coûts de production sont maitrisés), et d'autre part de limiter l'impact écologique d'un changement régulier de filtre 400 du fait de la réduction de la matière utilisée pour réaliser le filtre 400 est donc d'une maîtrise de la masse de déchets à recycler et des coûts associés. En outre, avec des coûts de production et de recyclage plus faibles, il est plus aisé économiquement parlant de remplacer plus régulièrement les filtres 400. Un remplacement plus régulier des filtres 400 permet une meilleure filtration de l'eau contaminée et donc de diminuer encore les risques de pollution par hydrocarbure.

La bague d'assemble 200 est amovible du filtre 400 et du préfiltre 100 et nettoyable afin de prolonger au maximum sa durée de vie. Qui plus est, en cas de changement du filtre 400 et/ou du préfiltre 300, la bague d'assemblage 200 peut être réutilisée. Ce qui limite encore les déchets.

Avantageusement, le filtre 400 représente moins de 50% de la masse totale de la cartouche 1 de filtration. Ainsi, seule une minorité de la masse totale de la cartouche 1 doit être détruite lors d'une opération de changement de filtre. Le reste de la cartouche 1, à savoir la bague d'assemblage 200 et le préfiltre 300, peut être nettoyé pour une réutilisation rapide. Ces opérations peuvent être réalisées sur site dans la mesure où les hydrocarbures filtrés sont pour l'essentiel confiné dans le filtre 400 à remplacer.

L'épaisseur de la paroi du conduit 410 du filtre 400 peut avantageusement être réduite au maximum, tout en garantissant une résistance à la pression satisfaisante de la cartouche 1.

Le point de faiblesse dans un dispositif comprenant plusieurs éléments et dans lequel un fluide transite est généralement situé là où les différents éléments coopèrent. En effet, à ces niveaux des forces de cisaillement apparaissent. Les éléments faits d'une structure monolithique n'ont généralement pas ce problème. Ainsi, la réduction de l'épaisseur d'une structure à des points de faiblesses apparait peu opportune. Malgré cela, l'invention permet cette réduction de l'épaisseur de la paroi du conduit 410 du filtre 400. En effet, l'épaisseur totale de la cartouche 1 au niveau de l'assemblage du filtre 400 et du préfiltre 100 est doublée, voire triplée par rapport à l'épaisseur du conduit seul 410 grâce à la bague d'assemblage 200 et potentiellement grâce à la portion en saillie 301 de la première grille 300. En fonction des contraintes auxquelles sera soumise la cartouche 1, il est possible de paramétrer d'une part la longueur de recouvrement et de contact de la bague sur le filtre, d'autre part la longueur de mise en prise des premiers et deuxièmes éléments de fixation entre eux, de sorte à adapter la résistance de la cartouche 1.

Le filtre 400 étant avantageusement le seul élément à retenir une quantité significative des hydrocarbures filtrés, seul ce dernier doit être traité hors site. L'ensemble des autres éléments peuvent être nettoyés sur site et réutilisés immédiatement.

L'invention n'est pas limitée au mode de réalisation précédemment décrit, mais s'étend à tous modes de réalisation couverts par la portée des revendications annexées.

Par exemple, la fixation de la première et/ou de la deuxième grille 300 sur le conduit 410 peut se faire par clipsage. Il en va de même pour la fixation du préfiltre 100 sur la bague d'assemblage 300. Par exemple, les premiers et deuxièmes éléments de fixation peuvent comprendre respectivement un clip et une encoche.

Par un autre exemple, le deuxième épaulement 303 peut ne pas être porté par la première grille 300 du filtre 400. Elle peut par exemple être portée directement par le conduit 410 du filtre 400. Dans cette hypothèse, la première grille 300 peut présenter un diamètre extérieur sensiblement égal au diamètre du conduit 410 hors épaulement 303.

Les sections du préfiltre, de la bague et du filtre sont de préférence circulaires, mais peuvent être également carrées, rectangulaires, ovales, etc.

Comme mentionné ci-dessus, l'invention trouve particulièrement à s'appliquer dans un système de récupération d'hydrocarbure issu d'au moins un transformateur électrique comprenant au moins une cartouche 1 de filtration telle que décrite ci-dessus.

Toutefois, l'invention trouve également à s'appliquer à la filtration des eaux de ruissellement de zones de stationnement, de stations-service, des autoroutes, des tunnels, des aéroports, etc. ces eaux de ruissellement sont actuellement traitées au mieux par décantation dans des bassins sans filtration ou par nettoyage au nettoyeur haute pression avec récupération éventuelle pour transfert sur site de destruction et/ou de traitement. L'invention est avantageusement adaptable sur les bassins de décantation susmentionnés, en aval, mais aussi en amont, desdits bassins.

L'invention n'est pas limitée non plus à la filtration des eaux de pluie, mais s'étend à la filtration d'eau de mer, notamment polluée en hydrocarbures par des dégazages ou des accidents de navigation.

Chacune des pièces rigides (hors matériaux de filtration) constituant la cartouche 1 peut être fabriquée par usinage ou par injection. Les pièces obtenues par injection prennent aisément la forme de celles illustrées sur les figures 1b et 2b. Par usinage, il sera plus aisé et moins coûteux de fabriquer un préfiltre et une bague d'assemblage présentant des pourtours extérieurs constants, tels que représentés sur le figures 1a et 2a respectivement. Ces deux techniques de fabrication permettent de respecter le cahier des charges en termes de résistance de la pièce fabriquée aux contraintes auxquelles elle sera soumise et en termes de fiabilité d'assemblage aux autres pièces de la cartouche 1, mais la fabrication par injection est préférée pour des raisons de coût de fabrication. Par exemple, à dimensions égales et avant utilisation, la masse totale de la cartouche de filtration dont les pièces sont obtenues par usinage est sensiblement égale à 1,4 kg, alors que la masse totale de la cartouche de filtration dont les pièces sont obtenues par injection peut être réduite à moins de 1 kg.

### REFERENCES

1. Cartouche
100. Préfiltre
101. Conduit
110. première partie du préfiltre
111. Premier filetage
120. Deuxième partie du Préfiltre
130. Premier matériau de filtration
Dpf1. Diamètre de la première partie du préfiltre
Dpf2. Diamètre de la deuxième partie du préfiltre
Lpf. Longueur du préfiltre
Epf. Epaisseur du préfiltre
200. Bague d'assemblage
210. Deuxième partie
220. Première partie
211. Deuxième filetage
212. Premier épaulement
Dba1. Diamètre de la première partie de la bague d'assemblage
Dba2. Diamètre de la deuxième partie de la bague d'assemblage
Lba. Longueur de la bague d'assemblage
Eba1. Epaisseur de la première de la bague d'assemblage
Eba2. Epaisseur de la deuxième de la bague d'assemblage
300. Première Grille
301. Portion en saillie
302. Filetage de grille
303. Deuxième épaulement
Dg1. Diamètre du deuxième épaulement
Dg2. Diamètre de la portion en saillie
Lg. Longueur de la portion en saillie
Eb. Epaisseur de la bague d'assemblage
400. Filtre
410. Conduit
411. Première embouchure
412. Deuxième embouchure
413. Taraudage de fixation grille
420. Deuxième grille
430. Deuxième matériau de filtration
Df. Diamètre du conduit
Lf. Longueur du conduit

## Revendications

1. Cartouche (1) de filtration d'eau contaminée en hydrocarbure comprenant au moins :
- un préfiltre (100) comprenant au moins un conduit (101), configuré pour y loger un premier matériau de filtration (130),
- un filtre (400) comprenant au moins un conduit (410), configuré pour y loger au moins un deuxième matériau de filtration (430), et
- un système de fixation configuré pour maintenir assemblés le conduit (410) du filtre (400) et le conduit (101) du préfiltre (100),
le système de fixation comprend au moins une bague d'assemblage (200), maintenant assemblés, de façon amovible l'un par rapport à l'autre, le conduit (410) du filtre (400) et le conduit (101) du préfiltre (100),
la cartouche (1) comprend trois parties amovibles : le filtre (400), le préfiltre (100) et la bague d'assemblage (200),
les conduits du filtre et du préfiltre sont fixés juxtaposés l'un à l'autre,
la bague d'assemblage (200) présente une première partie (220) configurée pour s'étendre en vis-à-vis d'une partie du conduit (410) du filtre (400) et une deuxième partie (210) configurée pour s'étendre en vis-à-vis d'une partie du conduit (101) du préfiltre (100),
la première partie (220) de la bague (200) présente une longueur Lba2 sur laquelle la première partie (220) recouvre et contacte le conduit (410) du filtre (400), et
la longueur Lba2 de la première partie (220) de la bague d'assemblage (200) est supérieure à une longueur Lba1 de la deuxième partie (210) de la bague d'assemblage (200),
la cartouche étant **caractérisée en ce que** :
la longueur Lba2 de la première partie (220) de la bague d'assemblage (200) est au moins deux fois supérieure à la longueur Lba1 de la deuxième partie (210) de la bague d'assemblage (200),
la longueur Lba2 sur laquelle la première partie (220) recouvre et contacte le conduit (410) du filtre (400) et l'épaisseur Eba2 de la première partie (220) de la bague (200) sur la longueur Lba2 sont configurées pour résister à la pression exercée au moins par l'eau contaminée lors de son passage dans ce conduit (410).

2. Cartouche (1) de filtration selon la revendication précédente, dans laquelle la bague d'assemblage (200) comprend un premier épaulement (212) et un premier élément de fixation, dans laquelle l'un parmi le filtre (400) et le préfiltre (100) comprend un deuxième épaulement (303) configuré pour coopérer avec le premier épaulement (212) et dans laquelle l'autre parmi le filtre (400) et le préfiltre (100) comprend un deuxième élément de fixation configuré pour coopérer avec le premier élément de fixation de la bague d'assemblage (200), la coopération entre les premier et deuxième éléments de fixations étant paramétrée de sorte à maintenir les premier et deuxième épaulements en butée l'un contre l'autre.

3. Cartouche (1) de filtration selon la revendication précédente, dans laquelle les premier et deuxième éléments de fixation sont réglables de sorte que les premier et deuxième épaulements soient maintenus en butée l'un contre l'autre avec une force d'appui réglable, de préférence l'un parmi le premier élément de fixation et le deuxième élément de fixation comprenant un taraudage et l'autre parmi le premier élément de fixation et le deuxième élément de fixation comprenant un filetage.

4. Cartouche (1) de filtration selon l'une des deux revendications précédentes, dans laquelle le deuxième épaulement s'étend depuis le contour d'une première grille (300) configurée pour fermer, de façon perméable au moins à l'eau, l'extrémité de l'un parmi le conduit (410) du filtre (400) et le conduit (101) du préfiltre (100) par laquelle le conduit (410) du filtre (400) et le conduit (101) du préfiltre (100) sont destinés à être maintenus assemblés.

5. Cartouche (1) de filtration selon la revendication 1, dans laquelle plus l'une au moins parmi la longueur Lba2 et l'épaisseur Eba2 est grande, plus l'épaisseur du conduit (410) du filtre (400) est petite.

6. Cartouche (1) de filtration selon l'une quelconque des revendications précédentes, dans laquelle la longueur Lba2 sur laquelle la première partie (220) de la bague d'assemblage (200) recouvre et contacte le conduit (410) du filtre (400) est comprise entre 3 et 20%, à plus ou moins 1 % près, de la longueur Lf du conduit (410) du filtre (400).

7. Cartouche (1) de filtration selon l'une quelconque des revendications précédentes, dans laquelle l'épaisseur Eba2 de la première partie (220) de la bague (200) est supérieure d'un rapport compris entre 10 et 200%, à plus ou moins 5% près, par rapport à l'épaisseur de la paroi du conduit (410) du filtre (400).

8. Cartouche (1) de filtration selon l'une quelconque des revendications précédentes, dans laquelle le conduit (410) du filtre (400) est en outre configuré pour y loger le deuxième matériau de filtration (430) de sorte qu'il confine le deuxième matériau de filtration (430) à l'intérieur du filtre.

9. Cartouche (1) de filtration selon l'une quelconque des revendications précédentes, dans laquelle la bague d'assemblage (200) présente sensiblement la forme d'un conduit dont le diamètre intérieur est déterminé en fonction du diamètre Dpf2 extérieur du préfiltre (100) et du diamètre de l'épaulement du filtre (400), le premier épaulement (212) s'étendant par exemple depuis la surface intérieure du conduit que la bague d'assemblage (200) forme sensiblement.

10. Cartouche (1) de filtration selon l'une quelconque des revendications précédentes, dans laquelle la somme de la masse du préfiltre (100) et de la masse de la bague d'assemblage (200) est supérieure à 50 %, de préférence supérieure à 60 %, de la masse totale de la cartouche (1) de filtration.

11. Système de récupération d'hydrocarbure issu d'au moins un transformateur électrique comprenant au moins une cartouche (1) de filtration selon l'une quelconque des revendications précédentes.

## Patentansprüche

1. Filterkartusche (1) für durch Kohlenwasserstoff verunreinigtes Wasser, die mindestens Folgendes umfasst:
- einen Vorfilter (100), der mindestens einen Kanal (101) umfasst, der so konfiguriert ist, dass er ein erstes Filtermaterial (130) in sich aufnimmt,
- einen Filter (400), der mindestens einen Kanal (410) umfasst, der so konfiguriert ist, dass er mindestens ein zweites Filtermaterial (430) in sich aufnimmt, und
- ein Befestigungssystem, das so konfiguriert ist, dass es den Kanal (410) des Filters (400) und den Kanal (101) des Vorfilters (100) zusammenhält,
wobei das Befestigungssystem mindestens einen Montagering (200) umfasst, der den Kanal (410) des Filters (400) und den Kanal (101) des Vorfilters (100) im Verhältnis zueinander abnehmbar zusammenhält,
die Kartusche (1) drei abnehmbare Teile umfasst: den Filter (400), den Vorfilter (100) und den Montagering (200),
die Kanäle des Filters und des Vorfilters nebeneinander befestigt werden,
der Montagering (200) einen ersten Teil (220) aufweist, der so konfiguriert ist, dass er sich gegenüber eines Teils des Kanals (410) des Filters (400) erstreckt, und einen zweiten Teil (210), der so konfiguriert ist, dass er sich gegenüber eines Teils des Kanals (101) des Vorfilters (100) erstreckt,
der erste Teil (220) des Rings (200) eine Länge Lba2 aufweist, über die der erste Teil (220) den Kanal (410) der Kartusche (400) abdeckt und berührt, und
die Länge Lba2 des ersten Teils (220) des Montagerings (200) größer ist als eine Länge Lba1 des zweiten Teils (210) des Montagerings (200),
wobei die Kartusche **dadurch gekennzeichnet ist, dass**:
die Länge Lba2 des ersten Teils (220) des Montagerings (200) mindestens zweimal größer ist als die Länge Lba1 des zweiten Teils (210) des Montagerings (200),
die Länge Lba2, über die der erste Teil (220) den Kanal (410) des Filters (400) abdeckt und berührt, und die Dicke Eba2 des ersten Teils (220) des Rings (200) auf der Länge Lba2 so konfiguriert sind, dass sie dem Druck standhalten, der mindestens vom verunreinigten Wasser während seines Durchgangs durch den Kanal (410) ausgeübt wird.

2. Filterkartusche (1) nach dem vorhergehenden Anspruch, wobei der Montagering (200) eine erste Schulter (212) und ein erstes Befestigungselement umfasst, wobei einer von dem Filter (400) und dem Vorfilter (100) eine zweite Schulter (303) umfasst, die so konfiguriert ist, dass sie mit der ersten Schulter (212) zusammenwirkt, und wobei der andere von dem Filter (400) und dem Vorfilter (100) ein zweites Befestigungselement umfasst, das so konfiguriert ist, dass es mit dem ersten Befestigungselement des Montagerings (200) zusammenwirkt, wobei das Zusammenwirken zwischen dem ersten und dem zweiten Befestigungselement so parametrisiert ist, dass die erste und die zweite Schulter aneinander anliegen.

3. Filterkartusche (1) nach dem vorhergehenden Anspruch, wobei das erste und das zweite Befestigungselement so einstellbar sind, dass die erste und die zweite Schulter mit einer einstellbaren Stützkraft aneinander anliegend gehalten werden, wobei vorzugsweise eines von dem ersten Befestigungselement und dem zweiten Befestigungselement ein Innengewinde umfasst und das andere von dem ersten Befestigungselement und dem zweiten Befestigungselement ein Außengewinde umfasst.

4. Filterkartusche (1) nach einem der beiden vorhergehenden Ansprüche, wobei sich die zweite Schulter von der Kontur eines ersten Gitters (300) erstreckt, das so konfiguriert ist, dass es das Ende eines von dem Kanal (410) des Filters (400) und dem Kanal (101) des Vorfilters (100) mindestens für Wasser durchlässig verschließt, und das den Kanal (410) des Filters (400) und den Kanal (101) des Vorfilters (100) zusammenhalten soll.

5. Filterkartusche (1) nach Anspruch 1, wobei die Dicke des Kanals (410) des Filters (400) umso kleiner ist, je größer mindestens eine von der Länge Lba2 und der Dicke Eba2 ist.

6. Filterkartusche (1) nach einem der vorhergehenden Ansprüche, wobei die Länge Lba2, über die der erste Teil (220) des Montagerings (200) den Kanal (410) des Filters (400) abdeckt und berührt, zwischen 3 und 20 %, plus/minus 1 %, der Länge Lf des Kanals (410) des Filters (400) beträgt.

7. Filterkartusche (1) nach einem der vorhergehenden Ansprüche, wobei die Dicke Eba2 des ersten Teils (220) des Rings (200) im Verhältnis zur Dicke der Wand des Kanals (410) des Filters (400) um ein Verhältnis zwischen 10 und 200 %, plus/minus 5 %, größer ist.

8. Filterkartusche (1) nach einem der vorhergehenden Ansprüche, wobei der Kanal (410) des Filters (400) ferner so konfiguriert ist, dass er das zweite Filtermaterial (430) derart in sich aufnimmt, dass er das zweite Filtermaterial (430) im Inneren des Filters eindämmt.

9. Filterkartusche (1) nach einem der vorhergehenden Ansprüche, wobei der Montagering (200) im Wesentlichen die Form eines Kanals aufweist, dessen Innendurchmesser in Abhängigkeit von dem Außendurchmesser Dpf2 des Vorfilters (100) und dem Durchmesser der Schulter des Filters (400) bestimmt wird, wobei sich die erste Schulter (212) zum Beispiel von der Innenfläche des Kanals erstreckt, die der Montagering (200) im Wesentlichen bildet.

10. Filterkartusche (1) nach einem der vorhergehenden Ansprüche, wobei die Summe der Masse des Vorfilters (100) und der Masse des Montagerings (200) größer als 50 %, vorzugsweise größer als 60 %, der Gesamtmasse der Filterkartusche (1) ist.

11. System zur Rückgewinnung von Kohlenwasserstoff aus mindestens einem elektrischen Transformator, das mindestens eine Filterkartusche (1) nach einem der vorhergehenden Ansprüche umfasst.

## Claims

1. A cartridge (1) for filtering water contaminated with hydrocarbons comprising at least:
- a pre-filter (100) comprising at least one conduit (101), configured to accommodate a first filtration material (130),
- a filter (400) comprising at least one conduit (410), configured to accommodate at least a second filtration material (430), and
- a fixing system configured to keep the conduit (410) of the filter (400) and the conduit (101) of the pre-filter (100) assembled,
the fixing system comprises at least one assembly ring (200), now assembled, in a removable manner relative to each other, the conduit (410) of the filter (400) and the conduit (101) of the pre-filter (100),
the cartridge (1) comprises three removable parts: the filter (400), the pre-filter (100) and the assembly ring (200),
the conduits of the filter and the pre-filter are fixed juxtaposed to one another, the assembly ring (200) has a first part (220) configured to extend opposite a part of the conduit (410) of the filter (400) and a second part (210) configured to extend opposite a part of the conduit (101) of the pre-filter (100),
the first part (220) of the ring (200) has a length Lba2 over which the first part (220) covers and contacts the conduit (410) of the filter (400), and
the length Lba2 of the first part (220) of the assembly ring (200) is greater than a length Lba1 of the second part (210) of the assembly ring (200),
the cartridge being **characterised in that**:
the length Lba2 of the first part (220) of the assembly ring (200) is at least twice greater than the length Lba1 of the second part (210) of the assembly ring (200),
the length Lba2 over which the first part (220) covers and contacts the conduit (410) of the filter (400) and the thickness Eba2 of the first part (220) of the ring (200) over the length Lba2 are configured to withstand the pressure exerted at least by the contaminated water during its passage through this conduit (410).

2. The filtration cartridge (1) according to the preceding claim, wherein the assembly ring (200) comprises a first shoulder (212) and a first fixing element, wherein one of the filter (400) and the pre-filter (100) comprises a second shoulder (303) configured to cooperate with the first shoulder (212) and wherein the other of the filter (400) and the pre-filter (100) comprises a second fixing element configured to cooperate with the first fixing element of the assembly ring (200), the cooperation between the first and second fixing elements being configured so as to maintain the first and second shoulders abutting against each other.

3. The filtration cartridge (1) according to the preceding claim, wherein the first and second fixing elements are adjustable so that the first and second shoulders are held abutting against each other with an adjustable support force, preferably one of the first fixing element and the second fixing element comprising a tapping and the other of the first fixing element and the second fixing element comprising a thread.

4. The filtration cartridge (1) according to one of the two preceding claims, wherein the second shoulder extends from the contour of a first grid (300) configured to close, in a manner permeable to at least water, the end of one of the conduit (410) of the filter (400) and the conduit (101) of the pre-filter (100) through which the conduit (410) of the filter (400) and the conduit (101) of the pre-filter (100) are intended to be kept assembled.

5. The filtration cartridge (1) according to claim 1, wherein the greater at least one of the length Lba2 and the thickness Eba2, the smaller the thickness of the conduit (410) of the filter (400).

6. The filtration cartridge (1) according to any one of the preceding claims, wherein the length Lba2 over which the first part (220) of the assembly ring (200) covers and contacts the conduit (410) of the filter (400) is comprised between 3 and 20%, plus or minus 1 %, of the length Lf of the conduit (410) of the filter (400).

7. The filtration cartridge (1) according to any one of the preceding claims, wherein the thickness Eba2 of the first part (220) of the ring (200) is greater by a ratio comprised between 10 and 200%, to plus or minus 5%, relative to the thickness of the wall of the conduit (410) of the filter (400).

8. The filtration cartridge (1) according to any one of the preceding claims, wherein the conduit (410) of the filter (400) is further configured to accommodate the second filtration material (430) so that it confines the second filtration material (430) inside the filter.

9. The filtration cartridge (1) according to any one of the preceding claims, wherein the assembly ring (200) has substantially the shape of a conduit whose internal diameter is determined according to the external diameter Dpf2 of the pre-filter (100) and the diameter of the shoulder of the filter (400), the first shoulder (212) extending for example from the inner surface of the conduit that the assembly ring (200) substantially forms.

10. The filtration cartridge (1) according to any one of the preceding claims, wherein the sum of the mass of the pre-filter (100) and the mass of the assembly ring (200) is greater than 50%, preferably greater than 60%, of the total mass of the filtration cartridge (1).

11. A system for recovering hydrocarbon from at least one electrical transformer comprising at least one filtration cartridge (1) according to any one of the preceding claims.
